# EUROPÄISCHE PATENTSCHRIFT

(11) **EP 2 025 967 B1**
(45) Veröffentlichungstag und Bekanntmachung des Hinweises auf die Patenterteilung: **28.04.2010**
(21) Anmeldenummer: 08014179.9
(22) Anmeldetag: 08.08.2008
(51) Int. Cl.: F16F 1/44, F16F 1/373

(54) **Dämpfungselement in Form eines zylindrischen Hohlkörpers und Verfahren zur Herstellung**
Attenuation element in the form of a cylindrical hollow body and method for producing same
Eléments d'amortissement sous forme d'un corps creux cylindrique et son procédé de fabrication

(30) Priorität: 11.08.2007 DE 102007037954
(43) Veröffentlichungstag der Anmeldung: 18.02.2009
(73) Patentinhaber: MöllerMiner GmbH, 33129 Delbrück (DE)
(72) Erfinder: Kirchner, Claus, 32457 Port Westfalica (DE); Langner, Mark, 33647 Bielefeld (DE)
(74) Vertreter: Schirmer, Siegfried

(56) Entgegenhaltungen:
- EP-A- 0 545 571
- EP-A- 1 630 446
- DE-A1-102004 054 958
- GB-A- 1 602 265
- US-A- 3 037 764
- US-A- 5 118 086
- US-A- 5 868 384

## Beschreibung

Die Erfindung betrifft ein Dämpfungselement in Form eines zylindrischen Hohlkörpers, der einstückig aus elastischem verformbaren Material im Spritzgießverfahren oder spanend hergestellt ist, mit im Abstand zueinander auf der Außenseite der Wandung umlaufenden Ringflanschen, wobei die äußeren Begrenzungen der Ringflansche senkrecht übereinander verlaufen und die Ringflansche unterschiedliche Stärken aufweisen sowie ein Verfahren zur Herstellung dieses Dämpfungselements.

Die bekannten Dämpfungselemente haben sich im praktischen Einsatz bewährt. Die Ringflansche dienen dabei zur Führung des Dämpfungselements und zur Stabilisierung unter Belastung. Der obere Teil ist als Dämpfungsbereich anzusehen, während der untere Bereich als Anschlag dient. Dabei besitzen die Wandungen des zylindrischen Hohlkörpers zwischen den Ringflanschen jeweils identische Stärke.

Aus dem Dokument DE 10 2004 054 958 A1 ist ein Dämpfungselement bekannt, das auf der Außen- und Innenseite mit umfangsseitigen Außen- und Innenlamellen versehen ist, die beide zusammen für die Federcharakteristiken verantwortlich sind.

Eine mehrteilige Gummifeder und deren Herstellung ist aus dem Dokument US-A-5 868 384 bekannt, wobei ein erstes längliches Element und ein zweites längliches Element gleichzeitig so gestaucht werden, daß die jeweiligen Anfangsformen dauerhaft geändert werden. Die Durometerhärte des ersten länglichen Elements ist dabei kleiner als die Durometerhärte des zweiten länglichen Elements, weshalb das erste Element bei Anstellen einer hierauf wirkenden Kraft eine größere Rückfederungsneigung als das zweite Element aufweist.

Der Erfindung liegt die Aufgabe zugrunde, die Dämpfungseigenschaften des Dämpfungselements mit einfachen konstruktiven Maßnahmen zu verbessern.

Diese Aufgabe wird erfindungsgemäß dadurch gelöst, daß die Wandungen zwischen den Ringflanschen unterschiedliche Stärken aufweisen und die innere Begrenzung der Wandung senkrecht übereinander verläuft sowie einen zugeordneten eine zylindrische Hohlform aufweisenden endseitigen Anschlag besitzt, der in den zylindrischen Hohlkörper eingepreßt und darin formschlüssig gehaltert ist. Für den überwiegenden Teil des Anwendungsbereichs hat es sich als vorteilhaft erwiesen, drei Ringflansche anzuordnen.

In Ausgestaltung der Erfindung kann die untere Begrenzung des Anschlags in einer Ebene mit der unteren Begrenzung des zylindrischen Hohlkörpers verlaufen.

Der endseitige Anschlag kann als mechanische Anschlagbegrenzung oder als flexible Hubbegrenzung ausgebildet sein. Der mechanische Anschlag ist zweckmäßigerweise aus einem festen Material gebildet, z. B. aus Hartkunststoff oder Metall. In weiterer Ausgestaltung der Erfindung weist der endseitige mechanische Anschlag ein Verrastungselement auf, z. B. einen umlaufenden äußeren Ringwulst, dem an der Innenseite des zylindrischen Hohlkörpers korrespondierende Aufnahmen zugeordnet sind. Es besteht die Möglichkeit, die flexible Hubbegrenzung ≥ als die stärkste Wandung des zylindrischen Hohlkörpers zwischen den Ringflanschen auszuführen.

Vorteilhafterweise besitzt die obere Begrenzung des zylindrischen Hohlkörpers eine umlaufende Anschrägung, die ihre höchste Ringbegrenzung auf der Außenseite des Hohlkörpers aufweist. Das erfindungsgemäße Dämpfungselement kann zweckmäßigerweise so hergestellt werden, daß zunächst der Rohling des zylindrischen Hohlköpers gebildet und anschließend gestaucht wird bei gleichzeitiger Verkürzung in Richtung der stauchenden Kraft um mindestens 20 % seiner ursprünglichen Länge. Dabei wölben sich die Wandungen des zylindrischen Körpers zwischen den Ringflanschen konvex, wodurch eine balgartige Ausbildung geschaffen wird. Die Stärke der Wölbung verläuft im Bereich zwischen den Ringflanschen gleichmäßig stark und symmetrisch um die axiale Mittellinie des zylindrischen Hohlkörpers. Die infolge der Stauchung gebildete Verkürzung des zylindrischen Hohlkörpers verbleibt auch nach der Entlastung von der stauchenden Kraft erhalten.

Nach einem weiteren Merkmal des erfindungsgemäßen Verfahrens wird während des Stauchungsvorgangs des Rohlings des zylindrischen Hohlkörpers der aus festem Material bestehende endseitige Anschlag in den Hohlkörper eingepreßt und darin formschlüssig gehaltert. Die flexible Hubbegrenzung kann mit leichtem Übermaß zum Hohlkörper eingeführt werden und erhält, wie die balgartige Wölbung zwischen den Ringflanschen, beim Stauchen eine innere Spannung, die von der Streckung der Molekülketten herrührt.

Ausführungsbeispiele der Erfindung sind in der Zeichnung dargestellt und werden nachfolgend beschrieben. Es zeigen:
- Fig. 1: eine Ansicht eines Rohlings eines zylindrischen Hohlkörpers;
- Fig. 2: einen Vertikalschnitt durch ein Dämpfungselement nach der Stauchung mit einem mechanischen Anschlag;
- Fig. 3: wie Fig. 2, jedoch mit einem flexiblen Anschlag als Hubbegrenzung;
- Fig. 4: einen Vertikalschnitt durch einen Rohling der flexiblen Hubbegrenzung
und
- Fig. 5: eine vergrößerte Darstellung des Punktes A.

Das dargestellte Dämpfungselement in Form eines zylindrischen Hohlkörpers besitzt drei Ringflansche 3; 3'; 3". Diese Ringflansche 3; 3'; 3" weisen ebenso wie die Wandung 2 zwischen diesen Flanschen unterschiedliche Stärke auf. Die äußeren Begrenzungen der drei Ringflansche 3: 3': 3" liegen senkrecht übereinander.

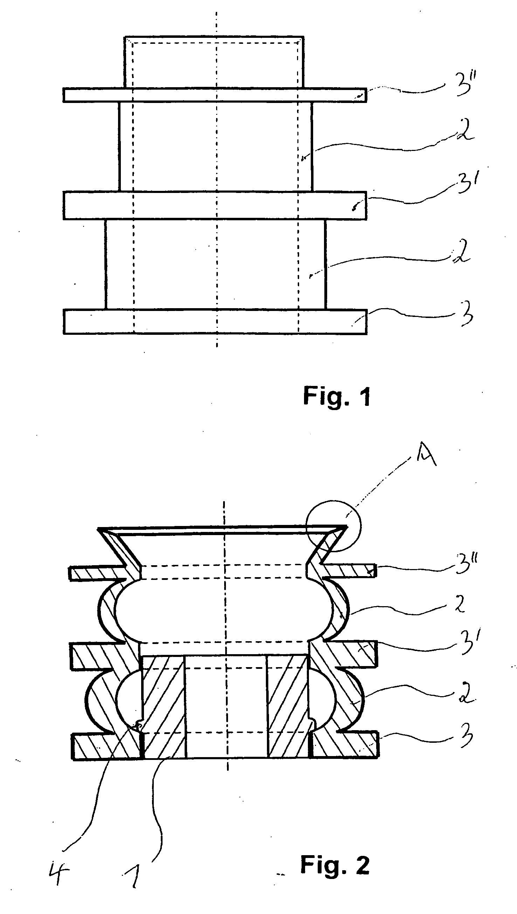

Nach Fig. 2 ist ein mechanischer Anschlag in Form eines zylindrischen Hartkunststoffhohlkörpers 1 im unteren Bereich des Dämpfungselement eingepreßt. Dieser zylindrische Hohlkörper 1 weist einen umlaufenden äußeren Ringwulst 4 als Verrastungselement auf. Diesem Ringwulst 4 sind korrespondierende Aufnahmen an der Innenseite des zylindrischen Hohlkörpers zugeordnet. Wie dargestellt, verläuft die untere Begrenzung des Hartkunststoffhohlkörpers 1 in einer Ebene mit der unteren Begrenzung des zylindrischen Hohlkörpers, der einstückig aus elastischem verformbaren Material gebildet ist.

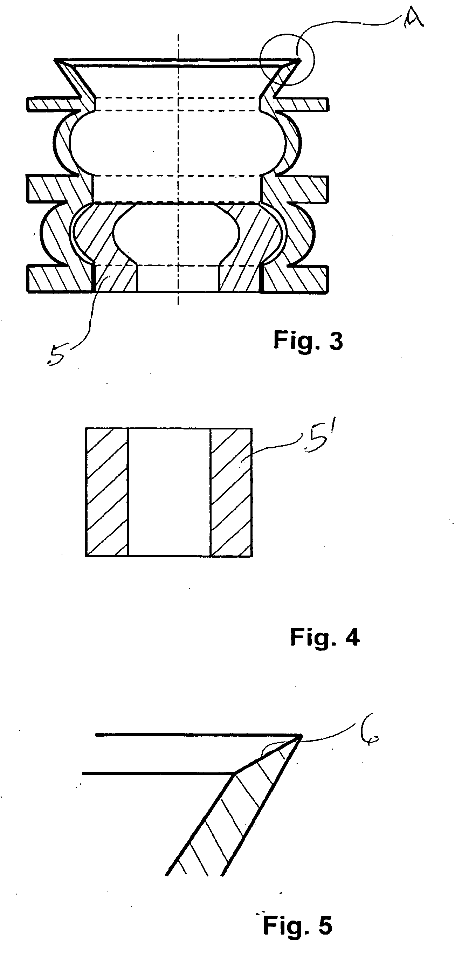

Eine Variante des endseitigen Anschlags ist in Fig. 3 dargestellt. An Stelle eines eingepreßten Hartkunststoffhohlkörpers 1 ist hier als Anschlag eine flexible Hubbegrenzung 5 angeordnet, wobei die flexible Hubbegrenzung 5 eine Stärke aufweist, die ≥ ist als die stärkste Wandung zwischen den Ringflanschen. Die Stärke der flexiblen Hubbegrenzung 5 kann bei Erfordernis auch ≥ als die stärkste Wandung zwischen den Ringflanschen 3; 3'; 3" sein. Durch die Stauchung des zylindrischen Hohlkörpers verformt sich die flexible Hubbegrenzung 5 und wird dadurch formschlüssig gehaltert. Dabei kann ein Spalt zwischen flexibler Hubbegrenzung 5 und gestauchtem Hohlkörper entstehen.

Die obere Begrenzung des zylindrischen Hohlkörpers weist eine umlaufende Anschrägung 6 auf, die dazu dient, dass sie sich als höchste Ringbegrenzung beim Stauchen symmetrisch auf der Außenseite ausbilden kann.

### Aufstellung der Bezugszeichen:

- 1: Hartkunststoffhohlkörper (Anschlag)
- 2: Wandung
- 3: Ringflansch
- 3': Ringflansch
- 3": Ringflansch
- 4: Ringwulst (Verrastungselement)
- 5: flexible Hubbegrenzug (umgeformt)
- 5': flexible Hubbegrenzung (Rohling)
- 6: Anschrägung

## Patentansprüche

1. Dämpfungselement in Form eines zylindrischen Hohlkörpers, der einstückig aus elastischem verformbaren Material im Spritzgießverfahren oder spanend hergestellt ist, mit im Abstand zueinander auf der Außenseite der Wandung (2) umlaufenden Ringflanschen (3; 3'; 3"), wobei die äußeren Begrenzungen der Ringflansche (3; 3'; 3") senkrecht übereinander verlaufen und die Ringflansche (3; 3'; 3") unterschiedliche Stärken aufweisen, **dadurch gekennzeichnet, daß** die Wandung (2) zwischen den Ringflanschen (3; 3'; 3") unterschiedliche Stärken aufweisen und die innere Begrenzung der Wandung (2) senkrecht übereinander verläuft sowie einen zugeordneten eine zylindrische Hohlform aufweisenden endseitigen Anschlag (1; 5) besitzt, der in den zylindrischen Hohlkörper eingepreßt und darin formschlüssig gehaltert ist.

2. Dämpfungselement nach Anspruch 1, **dadurch gekennzeichnet, daß** die untere Begrenzung des Anschlags (1; 5) in einer Ebene mit der unteren Begrenzung des zylindrischen Hohlkörpers verläuft.

3. Dämpfungselement nach Anspruch 1 oder 2, **dadurch gekennzeichnet, daß** der endseitige Anschlag (1) als mechanische Anschlagbegrenzung ausgebildet ist.

4. Dämpfungselement nach einem der Ansprüche 1 bis 3, **dadurch gekennzeichnet, daß** der Anschlag (1) aus einem festen Material gebildet ist.

5. Dämpfungselement nach einem der Ansprüche 1 bis 4, **dadurch gekennzeichnet, daß** der endseitige Anschlag (1) Verrastungselemente (4) aufweist, denen korrespondierende Aufnahmen an der Innenseite des zylindrischen Hohlkörpers zugeordnet sind.

6. Dämpfungselement nach einem der Ansprüche 1 bis 5, **dadurch gekennzeichnet, daß** der endseitige Anschlag als flexible Hubbegrenzung (5) ausgebildet ist.

7. Dämpfungselement nach Anspruch 6, **dadurch gekennzeichnet, daß** die flexible Hubbegrenzung (5) eine Stärke aufweist, die ≥ als die stärkste Wandung zwischen den Ringflanschen (3; 3'; 3") ausgelegt ist.

8. Dämpfungselement nach einem der Ansprüche 1 bis 7, **dadurch gekennzeichnet, daß** die obere Begrenzung des zylindrischen Hohlkörpers eine umlaufende Anschrägung (6) aufweist.

9. Dämpfungselement nach Anspruch 8, **dadurch gekennzeichnet, daß** die Anschrägung (6) ihre höchste Ringbegrenzung auf der Außenseite des Hohlkörpers aufweist.

10. Verfahren zur Herstellung eines Dämpfungselements nach einem der Ansprüche 1 bis 9, **dadurch gekennzeichnet, daß** zunächst der Rohling des zylindrischen Hohlkörpers gebildet und anschließend gestaucht wird bei gleichzeitiger Verkürzung in Richtung der stauchenden Kraft um mindestens 20 % seiner ursprünglichen Länge.

11. Verfahren nach Anspruch 10, **dadurch gekennzeichnet, daß** während des Stauchungsvorgangs des Rohlings des zylindrischen Hohlkörpers der aus festem Material bestehende Anschlag (1) in den Hohlkörper eingepresst und darin formschlüssig gehaltert wird.

12. Verfahren nach Anspruch 10, **dadurch gekennzeichnet, daß** während des Stauchungsvorgangs des Rohlings des zylindrischen Hohlkörpers die flexible Hubbegrenzung (5) in den Hohlkörper eingepresst und durch den Stauchvorgang eine Balgform erhält und damit formschlüssig gehaltert wird

13. Verfahren nach einem der Ansprüche 10 bis 12, **dadurch gekennzeichnet, daß** durch den Stauchungsvorgang die Wandungen (2) des zylindrischen Hohlkörpers zwischen den Flanschen (3; 3'; 3") konvex gewölbt werden und **dadurch** eine balgartige Ausbildung geschaffen wird.

## Claims

1. Damping element in the form of a cylindrical hollow body, which is produced integrally from resiliently deformable material in an injection-moulding method or by material removal, with annular flanges (3; 3'; 3") encircling at a spacing from one another on the outer side of the wall (2), wherein the outer boundaries of the annular flanges (3; 3'; 3") extend perpendicularly one above the other and the annular flanges (3; 3'; 3") have different thicknesses, **characterised in that** the walls (2) between the annular flanges (3; 3'; 3") have different thickness and the inner boundary of the wall (2) extends perpendicularly upwards in a line as well as has at the end an associated abutment (1; 5) which has a cylindrical hollow shape and which is pressed into the cylindrical hollow body and retained therein by mechanically positive couple.

2. Damping element according to claim 1, **characterised in that** the lower boundary of the abutment (1; 5) extends in a plane with the lower boundary of the cylindrical hollow body.

3. Damping element according to claim 1 or 2, **characterised in that** the abutment (1) at the end is constructed as a mechanical limit stop.

4. Damping element according to any one of claims 1 to 3, **characterised in that** the abutment (1) is formed from a solid material.

5. Damping element according to any one of claims 1 to 4, **characterised in that** the abutment (1) at the end has detent elements (4) with which corresponding receptacles at the inner side of the cylindrical hollow body are associated.

6. Damping element according to any one of claims 1 to 5, **characterised in that** the abutment at the end is constructed as a flexible stroke limiter (5).

7. Damping element according claim 6, **characterised in that** the flexible stroke limiter (5) has a thickness which is designed to be equal to or greater than the thickest wall between the annular flanges (3; 3'; 3").

8. Damping element according to any one of claims 1 to 7, **characterised in that** the upper boundary of the cylindrical hollow body has an encircling chamfer (6).

9. Damping element according to claim 8, **characterised in that** the chamfer (6) has its highest annular boundary on the outer side of the hollow body.

10. Method of producing a damping element according to any one of claims 1 to 9, **characterised in that** initially the blank of the cylindrical hollow body is formed and is subsequently upset with simultaneous shortening in the direction of the upsetting force by at least 20% of its original length.

11. Method according to claim 10, **characterised in that** during the upsetting process of the blank of the cylindrical hollow body the abutment (1) consisting of solid material is pressed into the hollow body and retained therein by mechanically positive couple.

12. Method according to claim 10, **characterised in that** during the upsetting process of the blank of the cylindrical hollow body the flexible stroke limiter (5) is pressed into the hollow body and gains a bellows shape by the upsetting process and is thus retained by mechanically positive couple.

13. Method according to any one of claims 10 to 12, **characterised in that** the walls (2) of the cylindrical hollow body between the flanges (3; 3'; 3") are convexly curved by the upsetting process and a bellows-like construction is thereby created.

## Revendications

1. Elément d'amortissement sous la forme d'un corps creux cylindrique réalisé en une seule pièce en une matière élastique déformable obtenue par injection ou par un usinage avec enlèvement de copeaux, comprenant, des brides annulaires périphériques (3, 3', 3") sur le côté extérieur de la paroi (2) et qui sont écartées l'une de l'autre,
la limite extérieure des brides annulaires (3, 3', 3") étant alignée perpendiculairement l'une sur l'autre et les brides annulaires (3, 3', 3") ont des épaisseurs de paroi différentes,
**caractérisé en ce que**
la paroi (2) présente des épaisseurs différentes entre les brides annulaires (3, 3', 3"), et
la surface intérieure de la paroi (2) est verticale et comporte une butée (1, 5) de forme creuse cylindrique, cette butée étant pressée dans le corps creux cylindrique et y est tenue par une liaison par la forme.

2. Elément d'amortissement selon la revendication 1,
**caractérisé en ce que**
la limite inférieure de la butée (1, 5) se situe dans un plan avec la limite inférieure du corps creux cylindrique.

3. Elément d'amortissement selon la revendication 1 ou 2,
**caractérisé en ce que**
la butée (1) du côté de l'extrémité est réalisée sous la forme d'une limite de butée mécanique.

4. Elément d'amortissement selon l'une des revendications 1 à 3,
**caractérisé en ce que**
la butée (1) est en un matériau solide.

5. Elément d'amortissement selon l'une des revendications 1 à 4,
**caractérisé en ce que**
la butée (1) du côté de l'extrémité, comporte des éléments d'accrochage (4) auxquels sont associés des logements correspondants du côté intérieur du corps creux cylindrique.

6. Elément d'amortissement selon l'une des revendications 1 à 5,
**caractérisé en ce que**
la butée d'extrémité est réalisée sous la forme d'une limite souple de course (5).

7. Elément d'amortissement selon la revendication 6,
**caractérisé en ce que**
la limite souple de course (5) a une épaisseur qui est supérieure ou égale à l'épaisseur de la paroi entre les brides annulaires (3, 3', 3").

8. Elément d'amortissement selon l'une des revendications 1 à 7,
**caractérisé en ce que**
la limite supérieure du corps creux cylindrique, comporte une rampe périphérique (6).

9. Elément d'amortissement selon la revendication 8,
**caractérisé en ce que**
la rampe (6) présente sa limite annulaire la plus haute sur le côté extérieur du corps creux.

10. Procédé de fabrication d'un élément d'amortissement selon l'une des revendications 1 à 9,
**caractérisé en ce qu'**
on réalise tout d'abord l'ébauche du corps creux cylindrique et ensuite, on le tasse en le raccourcissant en même temps dans la direction de la force de tassement ou d'au moins 20 % par rapport à sa longueur initiale.

11. Procédé selon la revendication 10,
**caractérisé en ce que**
pendant l'opération de tassement de l'ébauche du corps cylindrique creux, on enfonce de force la butée en un matériau solide (1) dans le corps creux et on le maintient par une liaison par la forme.

12. Procédé selon la revendication 10,
**caractérisé en ce que**
pendant l'opération de tassement de l'ébauche du corps cylindrique creux, on enfonce la limite souple de course (5) dans le corps creux, et on lui donne une forme de soufflet par l'opération de tassement et on le maintient ainsi par une liaison par la forme.

13. Procédé selon l'une des revendications 10 à 12,
**caractérisé en ce que**
par l'opération de tassement, on donne aux parois (2) du corps cylindrique creux, une courbure convexe entre les brides (3, 3', 3") en créant ainsi une forme de soufflet.
